# EUROPEAN PATENT SPECIFICATION

(11) **EP 1 149 428 B1**
(45) Date of publication and mention of the grant of the patent: **19.03.2003**
(21) Application number: 99967390.8
(22) Date of filing: 16.12.1999
(51) Int. Cl.: H01M 10/40, H01M 4/58

(54) **NON-AQUEOUS ELECTROLYTES FOR ELECTROCHEMICAL CELLS**
NICHTWÄSSRIGE ELEKTROLYTE FÜR ELEKTROCHEMISCHE ZELLEN
ELECTROLYTES NON AQUEUX POUR CELLULES ELECTROCHIMIQUES

(30) Priority: 17.12.1998 US 215115
(43) Date of publication of application: 31.10.2001
(73) Proprietor: Moltech Corporation, Tucson, AZ 85747 (US)
(72) Inventor: MIKHAYLIK, Yuriy V., Tucson, AZ 85750 (US); SKOTHEIM, Terje, A., Tucson, AZ 85718 (US); GORKOVENKO, Alexander A., Tucson, AZ 85748 (US)
(74) Representative: Watson, Robert James
(86) International application number: US9930116
(87) International publication number: WO00036683

(56) References cited:
- GB-A- 1 522 218
- US-A- 4 075 397
- US-A- 4 215 188
- US-A- 4 416 960
- DUDLEY J T ET AL: "CONDUCTIVITY OF ELECTROLYTES FOR RECHARGEABLE LITHIUM BATTERIES" JOURNAL OF POWER SOURCES,CH,ELSEVIER SEQUOIA S.A. LAUSANNE, vol. 35, no. 1, 1 June 1991 (1991-06-01), pages 59-82, XP000223777 ISSN: 0378-7753 cited in the application
- B. M. RAO AND L. P. KLEMANN: "Li/TiS2 Cell with Solvate Melt" J. ELECTROCHEMICAL SOC., vol. 127, 1980, pages 761-2, XP002142339 cited in the application

## Description

### TECHNICAL FIELD

The present invention relates generally to the field of nonaqueous electrolytes for use in electric current producing cells. More particularly, the present invention pertains to nonaqueous electrolytes comprising a highly concentrated solution of one or more lithium salts in one or more nonaqueous solvents. More specifically, the present invention pertains to nonaqueous electrolytes, suitable for use in an electric current producing cell, comprising: (a) one or more lithium salts, dissolved in (b) one or more nonaqueous oxygen-containing solvents; wherein the concentration of said one or more lithium salts is: (i) greater than 110% of the molar concentration of said one or more lithium salts which would provide maximum ionic conductivity at 25 °C in said one or more solvents; and, (ii) greater than 1.3 M. The present invention also pertains to electric current producing cells comprising such nonaqueous electrolytes, and methods for increasing the safety and cycle life of an electric current producing cell.

### BACKGROUND

Throughout this application, various publications, patents, and published patent applications are referred to by an identifying citation. The disclosures of the publications, patents, and published patent applications referenced in this application are included to more fully describe the state of the art to which this invention pertains.

Electric current producing cells, and batteries containing such cells, consist of pairs of electrodes of opposite polarity separated by an electrolyte. The charge flow between electrodes is maintained by an ionically conducting electrolyte, typically comprising an electrolyte solvent in which an ionic electrolyte salt is dissolved to provide the ionic conductivity.

Numerous nonaqueous electrolyte solvents and electrolyte salts for lithium secondary batteries have been described. Hossain in *Handbook of Batteries,* **1995,** 2^{nd} Edition, Chapter 36, 13-16, McGraw-Hill, New York; Dominey in *Lithium Batteries, New Materials, Developments and Perspectives,* **1994,** Chapter 4, 137-165, Elsevier, Amsterdam; and, Ue in *Progress in Batteries & Battery Materials,* **1997,** *16,* 332-349, for example, provide summaries of the properties of more widely used combinations of electrolyte salts and electrolyte solvents.

In these summaries electrolyte conductivity data are provided for combinations of lithium salts and solvents or solvent mixtures at numerous temperatures and concentrations. These tabulations show that in most salt/solvent combinations maximum conductivity is achieved at a particular salt concentration in the solvent, typically at about 1 M to 1.5 M, where M means moles/L. Above this concentration, conductivity decreases, or below this concentration conductivity decreases. These summaries also show that a mixture of two or more solvents provides higher conductivity than either single solvent alone. Furthermore, the most favored solvent mixtures are those comprising a solvent with a low dielectric constant, such as ε less than 10, and a solvent of high dielectric constant, such as ε greater than 20. Dudley *et al.* in *Journal of Power Sources,* **1991,** *35,* 59-82, report conductivity data on 150 electrolytes useful for rechargeable lithium batteries. For the most part these electrolytes are based on salt concentrations of 1 M in mixtures of solvents. However, a few examples are described in which the conductivity is determined at several salt concentrations and these show maximum conductivity at close to 1 M in each case.

In contrast, Rao *et al.* in *J. Applied Electrochem*., **1980,** *10,* 757-763, describe a rechargeable lithium/titanium disulfide cell with lithium thiocyanate in 1,3-dioxolane/dimethoxyethane electrolytes in which the salt concentration is in the range of 2.5 to 3.5 molal.

The choice of electrolyte for a particular cathode and anode combination depends on many factors, including: safety, cycle life, and, chemical compatibility of the cathode and anode materials to the components of the electrolyte.

For secondary batteries, electrolyte concentration is an important factor in determining the cycle life or charge-discharge efficiency. For example, U.S. Pat. No. 4,416,960 to Eustace *et al.* describes electrolytes based on LiAsF₆ in concentrations of 2.0 M to 3.0 M in 1,3-dioxolane/dimethoxyethane in Li/TiS₂ cells, and show Figure of Merit (FOM) data, a measure of cycle life, which tend to be higher at the lower end of this concentration range. Tobishima *et al*. in U.S. Pat. No. 4,737,424 show that for an electrolyte based on LiAsF₆ in ethylene carbonate/2-methyl tetrahydrofuran maximum charge-discharge efficiency occurs at salt concentrations of between 1.0 M and 1.5 M. Furthermore, the maximum efficiency is obtained at an electrolyte concentration apparently below the electrolyte concentration giving maximum conductivity.

The solubility of a lithium salt in a solvent or mixture of solvents may limit the concentration of the electrolyte to 2 M or less. For example, crystals of the salt or solid solvate complex may separate from the electrolyte at or above these concentrations. The crystalline solid solvate complex which may form from a salt and a solvent may be used as an electrolyte by dissolution in a non-solvating solvent. For example, U.S. Pat. No. 3,764,385 to Langer *et al*. describes an electric battery in which the electrolyte comprises an inorganic lithium salt complexed with a chelating tertiary amine, for example LiBr•PMDT, which has a melting point of 84-110 °C, dissolved in an aromatic solvent, where PMDT is pentamethyl diethylene triamine. Similarly, U.S. Pat. No. 4,321,314 to Bowden *et al.* describes a nonaqueous electrochemical cell in which the electrolyte system comprises a stoichiometric lithium salt complex with a volatile ether solvent dissolved in a second solvent. U.S. Pat. No. 4,329,404 to Bowden *et al.* describes a nonaqueous electrochemical cell in which an electrolyte salt is comprised of a lithium salt complexed with an ether solvent, substantially free of uncomplexed ether, dissolved in a solvent such as SO₂.

Solid solvate complexes with moderately low melting points may be used as electrolytes at temperatures above their melting points, (m.p.). For example, U.S. Pat. No. 3,977,900 to Luehrs describes the formation and isolation of LiCl•HMPA, (m.p. 150 °C), LiBr•4HMPA, (m.p. 71-74 °C), LiBr•TMU, (m.p. 123 °C), LiClO₄•HMPA, (m.p. 128 °C), LiSCN•2HMPA, (m.p. 82 °C), among others, where HMPA is hexamethylphosphoramide and TMU is tetramethylurea and the use of these as an electrolyte, in molten form, in thermally activated electrochemical cells.

In some cases solid lithium salt solvates have been used as solid electrolytes. For example, Francis *et al*. in U.S. Pat. No. 4,075,397 describe an electrochemical cell in which the solid electrolyte is the solid solvate from a glyme, such as mono-, di-, or triglyme, with lithium salts such as lithium hexafluorophosphate, lithium hexafluoroarsenate or lithium tetrafluoroborate. In a related study, Rao *et al*., *J. Electrochem. Soc.,* **1980,** *127,* 761-2, report that cells using lithium iodide solvates with glymes as a solid electrolyte were unable to be recharged.

Aurbach *et al.* in *Electrochimica Acta*, **1997,** *42*, 697-718 describe a study of electrolyte solutions based on solvents from the glyme family for secondary lithium batteries and conclude that glyme-based electrolytes are not suitable for use in rechargeable lithium battery systems having lithium anodes.

### SUMMARY OF THE INVENTION

The present invention pertains to a nonaqueous electrolyte for use in an electric current producing cell, wherein the electrolyte comprising: one or more lithium salt solvate complexes, wherein: (a) the solvate complexes comprise one or more salts and one or more complexing solvents; (b) the solvate complexes are characterized by n lithium-oxygen coordinate bonds per molecule, where n is an integer from 2 to 6, and may be the same or different in each occurrence; (c) the ratio of total oxygen equivalents, r, in the free solvating solvent of the electrolyte divided by the total oxygen equivalents coordinated in solvate complexes of the electrolyte, is less than 0.8; (d) the molar concentration of the one or more lithium salt solvate complexes is greater than 1.3 M; and (e) said one or more solvate complexes is liquid below 40°C.

In one embodiment, the one or more lithium salts is selected from the group consisting of: LiI, LiSCN, LiCF₃SO₃, LiN(CF₃SO₂)₂, LiC(SO₂CF₃)₃, (LiSₓ)ₙR, and Li₂Sₓ, where x is an integer from 1 to 20, and n is an integer from 1 to 20.

In one embodiment, the one or more lithium salts comprises lithium thiocyanate.

In one embodiment, the one or more lithium salts comprises lithium bis(trifluoromethylsulfonyl)imide.

In one embodiment, the one or more lithium salts comprises a mixture of lithium thiocyanate and lithium bis(trifluoromethylsulfonyl)imide. In a preferred embodiment, the mole ratio of lithium thiocyanate to lithium bis(trifluoromethylsulfonyl)imide is from 4:1 to 1:10.

In one embodiment, the one or more complexing solvents is selected from the group consisting of: acyclic ethers, cyclic ethers, polyethers, and, sulfones.

In one embodiment, the acyclic ether is selected from the group consisting of: dimethyl ether, diethyl ether, dipropyl ether, diisopropyl ether, dibutyl ether, bis-(2-ethylhexyl) ether, methyl t-butyl ether, dimethoxymethane, trimethoxymethane, ethylene glycol dimethyl ether, ethylene glycol diethyl ether, and, propylene glycol dimethyl ether.

In one embodiment, the cyclic ether is selected from the group consisting of: tetrahydrofuran, 2-methyl tetrahydrofuran, tetrahydropyran, oxepane, 1,3dioxolane, 1,3-dioxane, 1,4-dioxane, 1,3-dioxepane, 1,4-dioxepane, and, 1,4-dioxocane.

In one embodiment, the polyether is selected from the group consisting of: diethylene glycol dimethyl ether, triethylene glycol dimethyl ether, tetraethylene glycol dimethyl ether, dipropylene glycol dimethyl ether, and, polybutylene glycol ethers.

In one embodiment, r is less than 0.4. In a more preferred embodiment, r is essentially zero.

In one embodiment, the solvate complex comprises lithium thiocyanate with 1,3-dioxolane.

In one embodiment, the one or more solvate complexes comprises lithium bis(trifluoromethylsulfonyl)imide with 1,3-dioxolane and 1,2-dimethoxyethane.

The one or more solvate complexes is liquid below 40 °C. In a preferred embodiment, the one or more solvate complexes is liquid below 0 °C. In a more preferred embodiment, the one or more solvate complexes is liquid below -20 °C.

In one embodiment, the one or more solvate complexes has a glass transition temperature below -30 °C.

Another aspect of the present invention pertains to a nonaqueous electrolyte for use in an electric current producing cell, the electrolyte consisting essentially of one or more lithium salt solvate complexes.

In one embodiment, the lithium salt solvate complex comprises a lithium thiocyanate 1,3-dioxolane solvate complex.

In one embodiment, the lithium salt solvate complex comprises lithium bis(trifluoromethylsulfonyl)imide dimethoxyethane and 1,3-dioxolane solvate complexes.

In one embodiment, the lithium salt solvate complex comprises lithium bis(trifluoromethylsulfonyl)imide sulfolane solvate complex.

In one embodiment, the lithium salt solvate complex comprises lithium bis(trifluoromethylsulfonyl)imide and lithium thiocyanate dimethoxyethane and 1,3-dioxolane solvate complexes.

The one or more lithium salt solvate complex is liquid below 40 °C. In a preferred embodiment, the one or more solvate complexes is liquid below 0 °C. In a more preferred embodiment, the one or more lithium salt solvate complex is liquid below -20 °C.

In one embodiment, the one or more lithium salt solvate complex has a glass transition temperature below -30 °C.

Still another aspect of the present invention pertains to electric current producing cells comprising: (i) a cathode; (ii) an anode; and, (iii) a nonaqueous electrolyte, as described herein, interposed between the cathode and the anode.

In one embodiment, the cathode comprises a sulfur-containing cathode active material. In one embodiment, the sulfur-containing cathode active material comprises elemental sulfur. In one embodiment, the sulfur-containing cathode active material comprises a carbon-sulfur polymer material which, in its oxidized state, comprises a polysulfide moiety of the formula,
-Sₘ-, wherein m is an integer from 3 to 10. In a preferred embodiment, m is an integer equal or greater than 8. In one embodiment, the polymer backbone chain of the carbon-sulfur polymer material comprises conjugated segments. In one embodiment, the carbon-sulfur polymer has a polymer backbone chain and the polysulfide moiety, -Sₘ-, is covalently bonded by one or both of its terminal sulfur atoms on a side group to the polymer backbone. In one embodiment, the polysulfide moiety, -Sₘ-, is incorporated into the polymer backbone chain of the carbon-sulfur polymer material by covalent bonding of the polysulfide moiety's terminal sulfur atoms. In one embodiment, the carbon-sulfur polymer material comprises greater than 75 weight percent of sulfur.

In one embodiment, the anode comprises one or more anode active materials selected from the group consisting of: lithium metal, lithium-aluminum alloys, lithium-tin alloys, lithium-intercalated carbons, and lithium-intercalated graphites.

As will be appreciated by one of skill in the art, features of one aspect or embodiment of the invention are also applicable to other aspects or embodiments of the invention.

### BRIEF DESCRIPTION OF THE DRAWINGS

Figure 1 shows the conductivity of lithium bis(trifluoromethylsulfonyl)imide in dimethoxyethane and 1,3-dioxolane (42.6/57.4% v/v) at various concentrations.

Figure 2 shows the conductivity of lithium thiocyanate in 1,3-dioxolane at various concentrations at 25 °C.

Figure 3 show the capacity of cells in mAh with 1.4 M lithium imide electrolyte of Example 1 (■) and 0.75 M lithium imide electrolyte of Comparative Example 1 (•) from 1 to 150 cycles.

Figure 4 shows the Figure of Merit for cells with 1.4 M lithium imide electrolyte of Example 2 (○), 1.9 M lithium imide electrolyte of Example 3 (◆), and 0.75 M lithium imide electrolyte of Comparative Example 2 (Δ).

### DETAILED DESCRIPTION OF THE INVENTION

The electric current producing cells of the present invention are characterized by improved performance, as shown, for example, by high figure of merit (FOM) and a low rate of fade. Without wishing to be held to any specific theory, it is believed that this high performance arises from the low solubility of sulfide and polysulfide ions in the high concentration electrolyte. The donor properties of the preferred solvents of the invention lead to solvate complex formation so that at high concentration of salt the electrolyte has minimal free solvent. Lower concentration of sulfides and polysulfides in the electrolyte leads to less diffusion of these entities to other layers of the cell preventing undesirable sulfide and polysulfide reactions at the lithium based anode, including self discharge of the cell. In electrolytes of lower salt concentration, such as from 0.5 M to 1.0 M, where there is much more free solvent, sulfides and polysulfides are much more readily dissolved and at these higher concentrations can migrate to other layers of the cell creating undesirable results.

Furthermore, all electrolyte solvents are susceptible to reaction with lithium metal anode surfaces. It is generally believed that the reaction of the solvents results in the formation of a film at the metal surface. This film, in many cases, can reduce the efficiency of the cell. By reducing the amount of free solvent in the electrolyte the undesirable film forming reaction at the lithium surface is lessened.

In addition to the improvements in cycle life and capacity from the electrolytes of the present invention, the low amounts of free solvent in the electrolytes provides cells of enhanced safety, both in their use and in their fabrication.

### Nonaqueous Electrolyte

One aspect of the present invention pertains to a nonaqueous electrolyte suitable for use in an electric current producing cell. The nonaqueous electrolyte of the present invention comprises a highly concentrated solution of one or more lithium salts in one or more nonaqueous solvents.

In one embodiment, the present invention pertains to a nonaqueous electrolyte, suitable for use in an electric current producing cell, comprising: (a) one or more lithium salts, dissolved in (b) one or more nonaqueous oxygen-containing solvents; wherein the concentration of said one or more lithium salts is: (i) greater than 110% of the molar concentration of said one or more lithium salts which would provide maximum ionic conductivity at 25 °C in said one or more solvents; and, (ii) greater than 1.3 M.

The present invention pertains to a nonaqueous electrolyte, suitable for use in an electric current producing cell, comprising one or more lithium salt solvate complexes, wherein (a) said solvate complexes comprise one or more lithium salts and one or more complexing solvents; (b) said solvate complexes characterized by n lithium-oxygen coordinate bonds per molecule of the solvate complex, where n is an integer from 2 to 6 and may be the same or different at each occurrence; (c) the ratio of the total oxygen equivalents, r, in free solvating solvent of said electrolyte divided by the total oxygen equivalents coordinated in solvate complexes of said electrolyte, is less than 0.8; (d) the molar concentration of said one or more lithium salt solvate complexes is greater than 1.3 M; and (e) said one or more solvate complexes is liquid below 40°C.

In one embodiment, the present invention pertains to a nonaqueous electrolyte, suitable for use in an electric current producing cell, consisting essentially of one or more lithium salt solvate complexes.

### Lithium Salts

The nonaqueous electrolytes of the present invention comprise, *inter alia*, one or more lithium salts. Examples of lithium salts which are useful in the nonaqueous electrolytes of the present invention, include, but are not limited to, halides, such as, chloride, bromide, and iodide; thiocyanate; tetraphenylborate; alkoxides; phenoxides; enolates; thiolates; amides, such as diisopropylamide, bis(trimethylsilyl)amide and bis(triphenylsilyl)amide; phosphides, such as diphenylphosphide and bis(trimethylsilyl)phosphide; and the following lithium salts: lithium trifluoromethylsulfonate, (LiCF₃SO₃, lithium triflate), lithium bis(trifluoromethylsulfonyl)imide, (LN(CF₃SO₂)₂, lithium imide) and lithium tris (trifluoromethylsulfonyl) methide (LiC(SO₂CF₃)₃, lithium methide). Additional lithium imide compounds are described in U.S. Pat. No. 5,514,493 to Waddell *et al,* by Krause *et al.* in *Journal of Power Sources,* **1997,** *68,* 320-325 and by Kita *et al.* in *Journal of Power Sources,* **1997,** *68,* 307-310. Still other examples of suitable lithium salts include:

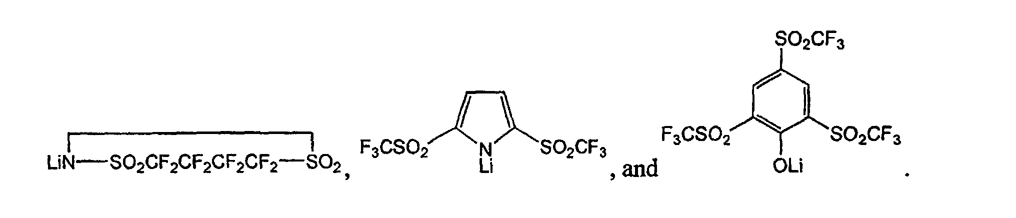

### Solvents and Solvates

The nonaqueous electrolytes of the present invention comprise, *inter alia,* one or more solvents.

The term "solvent," as used herein, pertains to a substance, usually a liquid, in which another substance, usually a solid may be dissolved. A solvent may comprise a single chemical compound (*e.g.*, pure ethyl alcohol) or it may comprise a mixture of chemical compounds (*e.g*., ethyl alcohol and ethyl acetate).

The term "solute," as used herein, pertains to a substance which has been dissolved in a solvent to yield a solution. The solute is usually the component of a solution, which is present in a lesser amount than the solvent.

The term "solvation," as used herein, pertains to a chemical interaction between a solute and a solvent in a solution, which typically is in the form of coordinate bonds.

The term "solvates," and "solvate complex," as used herein, pertain to the product of the chemical interaction between a solute and one or more solvent molecules, in which the solute and solvent molecules are bound by coordinate bonds.

The term "coordinate bond," as used herein, pertains to a covalent chemical bond between two atoms that is produced when one atom shares a pair of electrons with another atom lacking such a pair. Atoms capable of sharing a pair of electrons may be part of a molecule and may or may not carry a charge. For example, the oxygen atom of an ether, i.e. in a structure, -C-O-C-, is capable of sharing a pair of electrons to form a coordinate bond, such as with a metal ion. Molecules which share a pair of electrons with a metal ion are termed ligands.

The term "free solvent," as used herein, pertains to the portion of the solvent of the electrolyte solutions which is not part of a lithium salt solvate complex. In other words free solvent is not bound by coordinate bonds to lithium ions of the solute and is not a direct part of lithium salt solvate complexes.

Many solvents contain donor atoms which may participate in solvate formation with ionic lithium salts. Solvents which contain the donor atoms N and O are especially effective in forming solvates with ionic lithium salts. One useful measure of the ability of solvents to form solvates is the Gutmann Donor Number or donor number (DN), as defined and described by Gutmann in *Coordination Chemistry in Nonaqueous Solvents,* 1968, Springer-Verlag, Vienna. The numerical value of DN is derived from the heat of reaction (-ΔH in kcal.mole⁻¹) of the solvent with SbCl₅. On this scale DN values range from 2.7 for nitromethane to 33.1 for pyridine and 38.8 for hexamethylphosphoramide. A larger DN indicates a more effective or stronger ability to interact or solvate cations, such as lithium ions. Solvents with low DN, such as from 2 to 10, do not effectively solvate lithium ions and are relatively poor solvents for lithium salts. On the other hand solvents with a high DN, such as from 30 to 40, coordinate lithium too strongly. The preferred solvents for use in the present invention are those which have a DN in the range of 12 to 25. As examples, Ue in *Progress in Batteries & Battery Materials,* 1997, *16,* 332-349, reports a DN of 16.4 for ethylene carbonate, a DN of 20 for dimethoxyethane, a DN of 20 for tetrahydrofuran, and a DN of 16.5 for methyl acetate.

In one embodiment of the present invention, the one or more solvents are solvents containing O atom donors which can form Li-O coordination bonds.

Examples of suitable classes of oxygen containing solvents for use in the present invention, include, but are not limited to, carboxylic acid esters, carbonate esters, carboxylic acid amides, ureas, ketones, aldehydes, acetals, ketals, lactones, alcohols, ethers, sulfoxides, sulfones, phosphine oxides, phosphate esters, and phosphoramidates. Preferred classes of oxygen-containing solvents for use in the present invention include, but are not limited to, ethers, cyclic ethers, polyethers, carbonates, esters, and sulfones.

Examples of ethers include, but are not limited to, acyclic ethers, including, but not limited to, dialkyl ethers including dimethyl ether, diethyl ether, methylethyl ether, dipropyl ether, diisopropyl ether, dibutyl ether, methyl tertiarybutyl ether, diisobutyl ether, methylhexyl ether, bis-2-ethylhexyl ether, methyloctyl ether, dimethoxymethane, trimethoxymethane, dimethoxyethane, diethoxyethane, and 1,3-dimethoxypropane. The term "acyclic ether," as used herein, pertains to non-cyclic organic structures containing the -C-O-C- fragment.

Examples of cyclic ethers include, but are not limited to, tetrahydrofuran, tetrahydropyran, 3-methyltetrahydrofuran, oxepane, 1,4-dioxane, 1,3-dioxolane, 1,3-dioxepane, 1,4-dioxepane, oxocane, 1,3-dioxocane, 1,4-dioxocane, and trioxane.

Examples of polyethers include, but are not limited to, diethylene glycol dimethyl ether (diglyme), triethylene glycol dimethyl ether (triglyme), higher glymes, ethylene glycol divinylether, diethylene glycol divinylether, and triethylene glycol divinylether.

Examples of carbonates include, but are not limited to, dimethyl carbonate, diethyl carbonate, and methyl ethyl carbonate.

Examples of esters include, but are not limited to, methyl formate, ethyl formate, methyl acetate, ethyl acetate, butyl acetate, 2-ethylhexyl acetate, and methyl benzoate.

Examples of sulfones include, but are not limited to, sulfolane, 3-methyl sulfolane, and 3-3-sulfolene.

The specific choice of solvent will depend on several factors including the specific anion associated with the lithium ion in the lithium salt. Particularly preferred solvents include, but are not limited to,acyclic ethers, glymes and related polyethers, and cyclic ethers, such as 1,3-dioxolane. More preferred are mixtures of solvents comprising two or more solvents selected from acyclic ethers, glymes and related polyethers, and cyclic ethers, such as 1,3-dioxolane. Examples of such preferred mixtures include, but are not limited to, acyclic ethers and polyethers, acyclic ethers and cyclic ethers, and, polyethers and cyclic ethers. Preferred mixtures of solvents include, but are not limited to, 1,3-dioxolane and dimethoxyethane, 1,3-dioxolane and dimethoxymethane, tetrahydrofuran and 1,3-dioxolane, and tetrahydrofuran and dimethoxyethane. The volume ratio of the two solvents in the preferred binary mixtures may vary from about 5 to 95 to 95 to 5.

### Properties of Nonaqueous Electrolyte

The ionic conductivity of solutions of lithium salts in nonaqueous solvents, especially those of low dielectric constant, such as from a dielectric constant of 2 to 15, typically increases with concentration of the salt to a maximum and then decreases at higher concentrations. The maximum ionic conductivity for many electrolytes is obtained at concentrations close to 1 molar (1 M), for example, as shown in the data compiled by Dudley *et al.* in *Journal of Power Sources,* **1991,** *35,* 59-82.

In one embodiment of this invention, the electrolyte comprises a liquid solution of one or more lithium salts in one or more solvents in which the actual concentration of lithium salts is greater than that concentration which would be required to attain maximum conductivity. In one embodiment, the actual concentration of lithium salts is more than 110% of the concentration which would be required to attain maximum conductivity. In one embodiment, the actual concentration of lithium salts is more than 120% of the concentration which would be required to attain maximum conductivity. In one embodiment, the actual concentration of lithium salts is more than 130% of the concentration which would be required to attain maximum conductivity. In one embodiment, the actual concentration of lithium salts is more than 140% of the concentration which would be required to attain maximum conductivity.

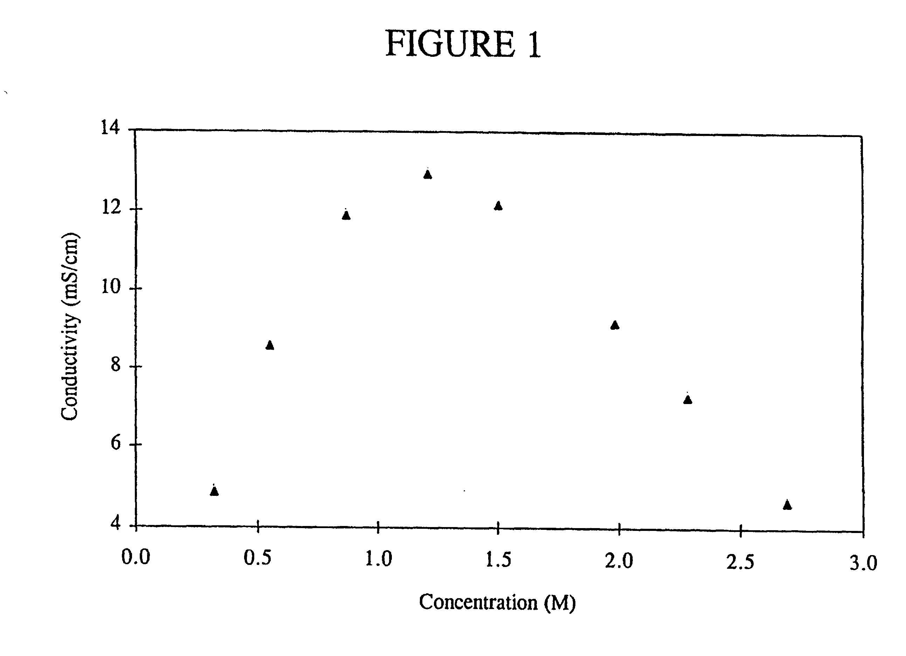

The conductivity of lithium bis(trifluoromethylsulfonyl)imide in a mixture of dimethoxyethane (DME) and 1,3-dioxolane (DOL) (42.6/57.4% v/v) at various concentrations is shown in Figure 1. It can be seen that the maximum conductivity is obtained at a concentration of approximately 1.2 M. A series of prismatic cells with lithium metal anodes, a cathode comprising a sulfur-containing cathode active material and containing a lithium imide DME and DOL electrolyte as shown in Figure 1, were evaluated with respect to capacity fade. Table 1 shows the specific capacity at 1^{st} and 10^{th} cycle and the fade (reduction in specific capacity) from the 1^{st} to 10^{th} cycle. The results show that at salt concentrations above 1 M, performance is improved as measured by capacity fade. The fade was 28% at 1.5 M, which is 125% (*i.e.*, 1.5/1.2 = 1.25) of the concentration yielding maximum conductivity for this salt in this solvent system. The lowest fade was observed at 2.0 M, which is 167% (*i.e*., 2.0/1.2 = 1.67) of the concentration yielding maximum conductivity for this salt in this solvent system.

**Table 1**

| Lithium Imide in DME/DOL, 42.6/57.4%, v/v | | | |
|---|---|---|---|
| **Imide Concentration** | **1**^{**st**} **Cycle Specific Capacity mAh/g** | **10**^{**th**} **Cycle Specific Capacity mAh/g** | **Fade** |
| 0.5 M | 1175 | 795 | 32% |
| 1.5M | 1160 | 840 | 28% |
| 2.0 M | 1145 | 925 | 19% |

Lithium salts are solvated upon dissolution in solvents such as those described herein. As the salt concentration increases, increasing amounts of solvent are consumed in the formation of a lithium salt solvate complex or solvate complexes. In some instances, at higher concentration of lithium salt, a lithium salt solvate complex may separate as a solid. In other instances, at higher concentrations of lithium salts, the solvents may be completely consumed in lithium salt solvate complex formation but the resulting solvate complex or complexes may remain liquid. The solvate complex or complexes may be low melting or the mixture of two or more complexes may form a low melting eutectic. In fact, it may not be recognized that solvate complexes have been formed unless determinations such as phase diagrams are made on these systems.

Solvate complexes prepared from a number of lithium salts with a number of different solvating solvents have been described. Many of the solvate complexes described have a discrete stoichiometry of lithium salt to solvating solvent. For example, U.S. Pat. No. 3,977,900 to Luehrs describes the formation and isolation of LiCl•HMPA, LiBr•4HMPA, LiBr•TMU, LiSCN•HMPA, LiSCN•2HMPA, LiClO₄•HMPA, LiClO₄•4HMPA among others, where HMPA is hexamethylphosphoramide and TMU is tetramethylurea. These solvates are reported to have melting points ranging from 70 °C to 150 °C. Couture *et al*., *Canadian Journal of Chemistry,* **1996,** *74,* 153-164, describe the identification of lithium salt solvates LiClO₄•2DME, LiBr•3BUTY and LiBr•2DME, where DME is dimethoxyethane and BUTY is butyrolactone. Brouillette *et al.*, *Journal of Solution Chemistry,* **1998,** *27,* 151-182 report that, based on the phase diagram, lithium bis(trifluoromethylsulfonyl)imide forms a solvate with dimethoxyethane which melts at 29 °C and has a composition lithium imide•3DME.

In one embodiment, solvate complexes of the present invention have melting points below 40 °C. In one embodiment, solvate complexes of the present invention have melting points below 0 °C. In one embodiment, solvate complexes of the present invention have melting points below -20 °C. Certain solvate complexes exhibit no distinct melting point and, for these solvate complexes, those with a glass transition point below -30 °C are preferred.

The most frequently described lithium salt solvate complexes have melting points above the melting points of the solvate complexes which are useful in the present invention, that is, above 40 °C. Multi-component lithium salt solvate complexes invariably have lower melting points than single component complexes. For example, lithium bis(trifluoromethylsulfonyl)imide with 3DME, lithium imide•3DME, has a melting point of 29 °C and lithium imide•2DME has melting point 61 °C, while a mixture of the two form a eutectic of melting point about 20 °C. Lithium imide forms a solvate with 1,3-dioxolane with a melting point of about -50 °C which can be combined with higher melting solvate complexes, such as lithium imide•3DME, to form lithium salt solvate complexes in the more preferred melting range of below -20 °C.

The lithium salt solvate complexes of this invention may comprise several combinations of lithium salts and solvents. The one or more lithium salt solvate complexes may comprise a single solvate from a lithium salt and one complexing solvent, such as, for example LiX•4L, where X is the anion of the electrolyte salt and L is the solvating solvent. The one or more lithium salt solvate complexes may comprise a mixture of solvates from a single lithium salt and a single complexing solvent, such as, for example, LiX•6L and LiX•4L, where X is the anion of the electrolyte salt and L is the solvating solvent. The one or more lithium salt solvate complexes may comprise a mixture of solvates from a single lithium salt and more than one complexing solvent, such as, for example, LiX•4L₁ and LiX•4L₂, where X is the anion of the electrolyte and L₁ and L₂ are solvating solvents. The one or more lithium salt solvate complexes may comprise a mixture of solvates from more than one lithium salt and a single complexing solvent, such as, for example, LiX₁•6L and LiX₂•6L, where X₁ and X₂ are anions of the electrolyte salts and L the solvating solvent. The one or more lithium salt solvate complexes may comprise a mixture of solvates from more than one lithium salt and more than one complexing solvent, such as, for example, LiX₁•4L₁ and LiX₂•6L₂ or LiX₁•6L₂ and LiX₂•4L₁, where X₁ and X₂ are anions of the electrolyte salts, and L₁ and L₂ are solvating solvents.

In one embodiment, the electric current producing cell of the present invention employs a lithium containing anode active material and a sulfur containing cathode active material. Upon discharge, such cells typically yield lithium ions and sulfide and/or polysulfide ions. The free solvating solvent or solvents present in the cell prior to discharge will solvate the lithium ions generated upon the discharge of the cell. In the discharged state the electrolyte solution in the cell typically comprises electrolyte salt solvate complexes and lithium polysulfide solvate complexes, generated from the anode and cathode. For example, where the electrolyte of the cell consists of the one or more lithium salt solvate complexes comprising a mixture of solvates from a single lithium salt and a single solvent, the electrolyte solution in the discharged cell will be comprised of a mixture of lithium salt complexes and lithium polysulfide solvate complexes, such as for example, LiX•6L, LiX•4L, and Li₂Sₓ•yL, where X is the anion of the electrolyte salt, L is the solvating solvent, y is an integer from 4 to 12, and x is an integer from 2 to 20. In like manner, lithium salt solvate complexes from other salts and solvating solvents will comprise lithium polysulfide solvates from the discharged cell of the present invention.

When the electrolyte comprises more than one lithium salt solvate complex, the ratios of the individual lithium salt complexes may vary widely. For example, when the lithium salt complex consists of two components the ratios may range from about 1 to 10 to about 10 to 1 by weight. For mixtures comprising more than two lithium salt solvate complexes it is preferably that at least 5% by weight of each be present.

The nonaqueous electrolytes of the present invention may be characterized by the ratio, r, of the total oxygen equivalents in the free solvating solvent of the nonaqeuous electrolyte to the total oxygen equivalents actually coordinated in the solvate complex of the nonaqueous electrolyte. The term "oxygen equivalent," as used herein, pertains to the number of oxygen atoms per molecule of nonaqueous oxygen-containing solvent which may coordinate with a lithium ion to form a Li-O coordinate bond.

The most common coordination numbers of lithium ions with oxygen ligands is 6 or 4 as illustrated in Olsher *et al., Chemical Reviews,* **1991,** 137-164. In lithium salt solvate complexes with oxygen-containing solvents the solvents act as ligands through the oxygen atoms. The lithium salt solvate complexes will, for example, have six or possibly four oxygen atoms from the solvating solvent or solvents coordinated to the lithium ion to form Li-O coordinate bonds. The six Li-O coordinate bonds of the lithium salt solvate complex may be formed from six molecules of solvating solvent or may be formed from less than six molecules of solvating solvent, if the solvent has more than one oxygen atom per molecule. For example, solvents which contain a single oxygen atom, such as tetrahydrofuran, (THF, C₄H₈O), may form solvates of the formula LiX•6THF. Thus, THF as a solvating solvent has one oxygen equivalent per molecule. Dimethoxyethane, (C₄H₁₀O₂), forms solvates with lithium salts of the formula LiX•3DME. In the solvate complex, LiX•3DME, there are six Li-O coordinate bonds formed from three molecules of DME. Thus, the solvent DME has two equivalents of oxygen per molecule. Other solvents such as, for example, 1,3-dioxolane, (C₃H₆O₂), although containing two oxygen atoms per molecule, forms solvates in which only one oxygen atom per molecule coordinates with the lithium salt. For example, 1,3-dioxolane solvates of the formula LiX•6DOL are formed with lithium salts. 1,3-dioxolane is a solvent with one oxygen equivalents.

Examples of solvents with one oxygen equivalent include, but are not limited to, diethyl ether, diisopropyl ether, dibutyl ether, dialkyl ethers, tetrahydrofuran, tetrahydropyran, 1,3-dioxolane, diethyl carbonate, methyl acetate, and, sulfolane. Examples of solvents with two oxygen equivalents per molecule include, but are not limited to, dimethoxyethane, diethoxyethane, 1,3-dimethoxy propane, and, 1,2-dimethoxy cyclohexane. An example of a solvent with three oxygen equivalents per molecule is diethylene glycol dimethyl ether, (diglyme).

The ratio, r, can be calculated as illustrated in the following example, in which one mole of lithium salt, LiX, is dissolved in a mixture of 4 moles of DME and 4 moles of DOL, by assuming that, from the salt LiX and the solvent mixture of 4 moles of DME and 4 moles of DOL, the solvate complex LiX•3DME is formed. This solvate complex has 6 oxygen equivalents incorporated in the solvate complex, two oxygen equivalents for each DME molecule. The total oxygen equivalents in the DME/DOL solvent mixture is 12; four equivalents from 4 moles of DOL and eight equivalents from 4 moles of DME. Free solvent oxygen equivalents is, therefore, 12 - 6 = 6. Free solvent oxygen equivalents divided by oxygen equivalents in solvate, r, is 6/6 = 1.0.

Applying this method of calculation to lithium bis(trifluoromethylsulfonyl)imide in 1,3-dioxolane/dimethoxyethane at the different concentrations of examples and comparative examples, as described later, provides the results summarized in Table 2.

**Table 2**

| Free solvent ratio, r, for lithium imide electrolytes | | |
|---|---|---|
| | **Imide concentration** | **r** |
| Example 1 | 1.4M | 0.63 |
| Comparative Example 1 | 0.75 M | 2.3 |
| Example 3 | 1.9M | 0.0 |
| Maximum conductivity | 1.2 M | 0.93 |

Preferred nonaqueous electrolytes of the present invention are those in which the ratio, r, of the total oxygen equivalents in the free solvating solvent of the nonaqeuous electrolyte to the total oxygen equivalents actually coordinated in the solvate complex of the nonaqueous electrolyte, is less than 0.8. More preferred electrolytes are those in which r is less than 0.4. Most preferred electrolytes are those in which r is essentially zero.

The nonaqueous electrolytes of the present invention may be characterized by the ratio, r, of the total oxygen equivalents in the free solvating solvent of the nonaqeuous electrolyte to the total oxygen equivalents actually coordinated in the solvate complex of the nonaqueous electrolyte.

Particularly useful lithium salt solvate complexes for use in the present invention are those derived from lithium salts including, but not limited to, lithium bis(trifluoromethylsulfonyl)imide, lithium thiocyanate, lithium iodide and lithium triflate, and solvents including, but not limited to, 1,3-dioxolane, dimethoxyethane, dimethoxymethane, and, sulfolane.

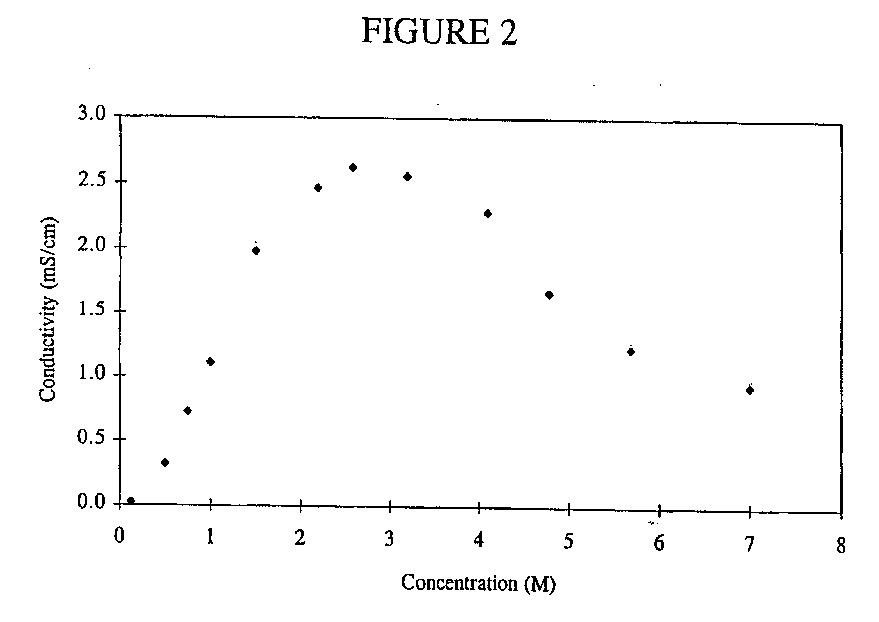

In one embodiment, a lithium salt solvate complex derived from one salt with one solvent is formed from lithium thiocyanate and 1,3-dioxolane. Preferred are the complexes or the mixture of complexes LiSCN•zDOL, where z is an integer from 2 to 4. Note that lithium thiocyanate solvate complexes with 1,3-dioxolane, LiSCN•zDOL, where z is greater than 5 are below the salt concentration of maximum ionic conductivity, as shown in Figure 2, and are not preferred.

In one embodiment, a lithium salt solvate complex derived from one salt with one solvent is formed from lithium bis(trifluoromethylsulfonyl)imide and sulfolane. Especially preferred are complexes or mixtures of complexes Li(CF₃SO₂)₂N•zSulfolane, where z is an integer from 2 to 4.

In one embodiment, a lithium salt solvate complex mixture derived from one salt with two solvents is formed from lithium bis(trifluoromethylsulfonyl)imide, dimethoxyethane, and 1,3-dioxolane. Especially preferred are mixtures of Li(CF₃SO₂)₂N•zDME, where z in an integer from 2 to 4, and Li(CF₃SO₂)₂N•zDOL, where z is an integer from 3 to 6, in weight ratios of from 1 to 5 to 5 to 1.

In one embodiment, a lithium salt solvate complex mixture derived from two salts with two solvents is formed from the salts lithium bis(trifluoromethylsulfonyl)imide and lithium thiocyanate with solvents dimethoxyethane and 1,3-dioxolane. Especially preferred are such mixtures wherein the weight ratio of lithium salts is from I to 5 to 5 to 1 and the weight ratio of dimethoxyethane to 1,3-dioxolane is from about 1 to 5 to 5 to 1.

### Electric Current Producing Cells

One aspect of the present invention pertains to electric current producing cells, also referred to herein as batteries, comprising an electrolyte as described herein. Thus, in one embodiment, the present invention pertains to an electric current producing cell comprising: (i) a cathode; (ii) an anode; and, (iii) a nonaqueous electrolyte, as described herein, interposed between said cathode and said anode.

Although the electric current producing cell of the present invention may be utilized for a wide variety of primary and secondary batteries known in the art, it is preferred to utilize these cells in secondary or rechargeable batteries.

### Cathodes

The electric current producing cells of the present invention comprise a cathode, which may comprise any of the commonly used cathode active materials, including but not limited to those described in the various references cited herein. The term "cathode active material," as used herein, pertains to an electrochemically active material which is present in the cathode.

Examples of suitable cathode active materials include, but are not limited to, lithiated transition metal chalcogenides, such as, for example, the electroactive oxides, sulfides, and selenides of transition metals, for example, manganese oxides, titanium sulfides, and vanadium oxides; electroactive conductive polymer, such as, for example, polypyrroles, polyphenylenes, polythiophenes, and polyacetylenes; and, sulfur-containing cathode active materials.

In one embodiment, the cathode comprises a sulfur-containing cathode active material. Unlike the lithiated transition metal chalcogenides which undergo a lithium intercalation process and a change in the valence state of the metal during the electrochemical reaction of the cell, electroactive sulfur-containing cathode active materials undergo oxidation-reduction, or redox, electrochemical reactions during the operation of the cell by the breaking or forming of sulfur-sulfur covalent bonds. In one embodiment, the electroactive sulfur-containing material comprises elemental sulfur. In one embodiment, the electroactive sulfur-containing material is organic, that is, it comprises both sulfur atoms and carbon atoms. In one embodiment, the electroactive sulfur-containing material is polymeric.

In a preferred embodiment, the cathode comprises electroactive sulfur-containing cathode materials which, in their oxidized state, comprise a polysulfide moiety of the formula, -Sₘ-, wherein m is an integer equal to or greater than 3, preferably m is an integer from 3 to 10, and most preferably m is an integer equal to or greater than 6. Examples of these preferred cathode materials include elemental sulfur and carbon-sulfur polymer materials, as described in U.S. Pat. Nos. 5,529,860; 5,601,947; and 5,690,702; in U.S. Pat. Application Ser. No. 08/602,323, all by Skotheim *et al*.; and in U.S. Pat. Application Ser. No. 08/995,112 to Gorkovenko *et al*.

In a preferred embodiment, the polysulfide moiety, -Sₘ-, of the carbon-sulfur polymer material is covalently bonded by one or both of its terminal sulfur atoms on a side group to the polymer backbone chain of the polymer material. In another preferred embodiment, the polysulfide moiety, -Sₘ-, of the carbon-sulfur polymer material is incorporated into the polymer backbone chain of the polymer material by covalent bonding of the polysulfide moiety's terminal sulfur atoms. In another preferred embodiment, the carbon-sulfur polymer material with polysulfide, -Sₘ-, groups, wherein m is an integer equal to or greater than 3, comprises greater than 75 weight percent of sulfur.

In a preferred embodiment, the electroactive sulfur-containing material comprises a sulfur-containing polymer comprising an ionic polysulfide moiety selected from the group of ionic polysulfide moieties consisting of: ionic -Sₘ⁻ moieties and ionic Sₘ²⁻ moieties, wherein m is an integer equal to or greater than 3, and preferably m is an integer equal to or greater than 8. Examples of these sulfur-containing materials include sulfur-containing polymers comprising ionic -Sₘ⁻ moieties, as described in U.S. Pat. No. 4,664,991 to Perichaud *et al*, and sulfur-containing polymers comprising ionic Sₘ²⁻ moieties, as described in the aforementioned U.S. Pat. No. 4,664,991 and in European Pat. No. 250,518 B1 to Genies. In one embodiment, the polymer backbone chain of the sulfur-containing polymer having an ionic polysulfide moiety comprises conjugated segments. In one embodiment, the polysulfide moiety, -Sₘ⁻, is covalently bonded by one of its terminal sulfur atoms on a side group to the polymer backbone chain of the sulfur-containing polymer. In one embodiment, the sulfur-containing polymer having an ionic polysulfide moiety comprises greater than 75 weight percent of sulfur.

The cathode of the cells of this invention may further comprise additives which are not cathode active materials. Examples of such additives include, but are not limited to, conductive metals, conductive carbons, and, metal oxides.

### Anodes

The electric current producing cells of the present invention comprise an anode, which may comprise any of the commonly used anode active materials, including but not limited to those described in the various references cited herein. The term "anode active material," as used herein, pertains to an electrochemically active material which is present in the anode.

Examples of suitable anode active materials include, but are not limited to, one or more metals or metal alloys or a mixture of one or more metals and one or more alloys, wherein said metals are selected from the Group IA and IIA metals in the Periodic Table. Other examples of suitable anode active materials include, but are not limited to, alkali-metal intercalated conductive polymers, such as lithium doped polyacetylenes, polyphenylenes, polypyrroles, and the like, and alkali-metal intercalated graphites and carbons. Anode active materials comprising lithium are especially useful. Preferred anode active materials are lithium metal, lithium-aluminum alloys, lithium-tin alloys, lithium-intercalated carbons, and lithium-intercalated graphites.

### Solid Porous Separators

The electric current producing cells of the present invention preferably comprise a separator. Typically, the separator is a solid non-conductive or insulative material which separates or insulates the anode and the cathode from each other and which comprises permits the transport of ions between the anode and the cathode. A variety of separator materials are known in the art.

In one embodiment, the separator is a solid porous material, the pores of which are partially or substantially filed with one or more ionic electrolyte salts and solvents, and optionally ionic conductive polymers.

Examples of suitable solid porous separator materials include, but are not limited to, polyolefins, such as, for example, polyethylenes and polypropylenes, glass fiber filter papers, and ceramic materials. Further examples of separators and separator materials suitable for use in this invention are those comprising a microporous pseudo-boehmite layer, which may be provided either as a free standing film or by a direct coating application on one of the electrodes, as described in U.S. Pat. Application Ser. No. 08/995,089, by Carlson *et al.* of the common assignee and in copending applications "Separators for Electrochemical Cells" and "Protective Coating for Separators for Electrochemical Cells," both filed on even day herewith of the common assignee.

Typically, these separator materials are supplied as porous free standing films which are interleaved with the anodes and the cathodes in the fabrication of electric current producing cells. Alternatively, the solid porous separator layer may be applied directly to one of the electrodes, for example, as described in U.S. Pat. No. 5,194,341 to Bagley *et al*.

In one embodiment, the solid porous separator is a porous polyolefin separator. In one embodiment, the solid porous separator comprises a microporous pseudo-boehmite layer.

### Form of the Nonaqueous Electrolyte

The electric current producing cells of the present invention comprise a nonaqueous electrolyte, as described herein, interposed between said cathode and said anode. The nonaqueous electrolyte of the present invention may be in the form of a liquid electrolyte, a gel polymer electrolyte, or a solid polymer electrolyte. In a preferred embodiment, the electrolyte is in the form of a liquid electrolyte.

To form a liquid electrolyte, one or more ionic electrolyte salts, as described herein, is typically added to one or more electrolyte solvents, as described herein.

To form a gel polymer electrolyte, one or more ionic conductive polymers is typically added to the nonaqueous electrolyte of this invention. The amount of electrolyte solvent results in a gel or semi-solid state of the electrolyte in contrast to the solid state of a solid polymer electrolyte.

Examples of suitable gel polymer electrolytes in the methods of the present invention include, but are not limited to, those comprising, an ionic lithium salt, one or more electrolyte solvents in sufficient quantity to provide the desired semi-solid or gel state, and one or more ionically conductive polymers selected from the group consisting of: polyethylene oxides (PEO), polypropylene oxides, polyacrylonitriles, polysiloxanes, polyphosphazenes, polyimides, polyethers, sulfonated polyimides, perfluorinated membranes (NAFION™ resins), polydivinyl polyethylene glycols, polyethylene glycol diacrylates, polyethylene glycol dimethacrylates, derivatives of the foregoing, copolymers of the foregoing, crosslinked and network structures of the foregoing, and blends of the foregoing.

To form a solid polymer electrolyte, one or more ionic conductive polymers is typically added to the nonaqeuous electrolyte of this invention. Typically, the amount of nonaqeuous electrolyte is less than 20 per cent by weight of the total weight of solid polymer electrolyte. Examples of suitable ionic conductive polymers include, but are not limited to, those selected from the group consisting of: polyethers, polyethylene oxides (PEO), polypropylene oxides, polyimides, polyphosphazenes, polyacrylonitriles (PAN), polysiloxanes, polyether grafted polysiloxanes, derivatives of the foregoing, copolymers of the foregoing, and crosslinked and networked structures of the foregoing. Ionically conductive solid polymer electrolytes may additionally function as separator materials between the anode and the cathode of an electric current producing cell.

### EXAMPLES

Several embodiments of the present invention are described in the following examples, which are offered by way of illustration and not by way of limitation.

### Example 1

A cathode was prepared by coating a mixture of 75 parts of elemental sulfur (available from Aldrich Chemical Company, Milwaukee, WI), 10 parts of a conductive carbon pigment PRINTEX XE-2 (a trademark for a carbon pigment available from Degussa Corporation, Akron, OH), and 15 parts of SAB-50 conductive carbon pigment (a tradename for acetylene black available from Chevron Corporation, Baytown, TX) dispersed in isopropanol onto a 17 micron thick conductive carbon coated aluminum foil substrate (Product No. 60303 available from Rexam Graphics, South Hadley, MA). After drying and calendering the cathode coating thickness was about 12 microns. The anode was lithium foil of about 50 microns in thickness. The electrolyte was a 1.4 M solution of lithium bis(trifluoromethylsulfonyl)imide (available from 3M Corporation, St. Paul, MN) in a 42:58 volume ratio mixture of 1,3-dioxolane and dimethoxyethane. The porous separator used was 16 micron E25 SETELA (a trademark for a polyolefin separator available from Tonen Chemical Corporation, Tokyo, Japan, and also available from Mobil Chemical Company, Films Division, Pittsford, NY).

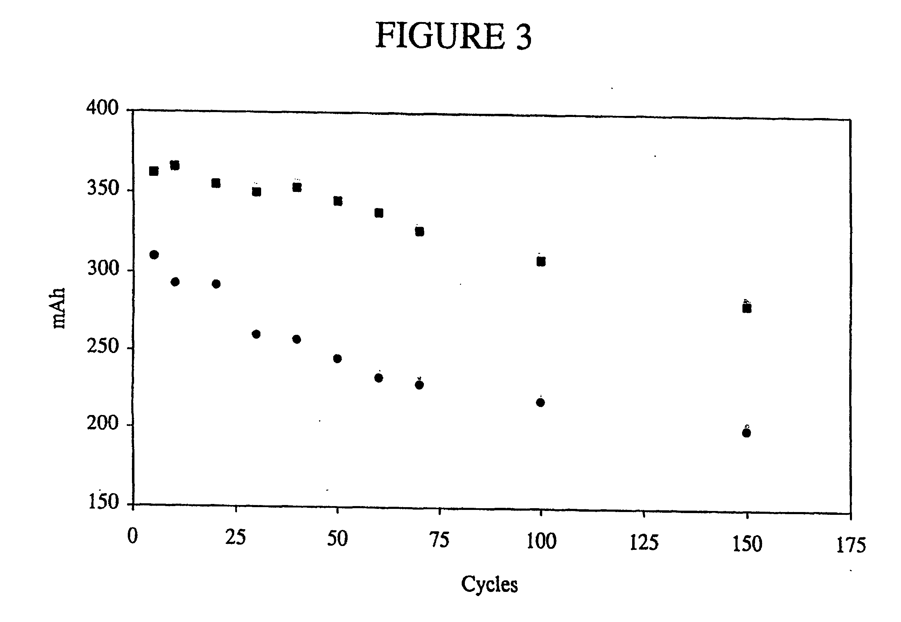

The above components were combined into a layered structure of cathode/separator/anode, which was wound and compressed, with the liquid electrolyte filling the void areas of the separator and cathode to form prismatic cells with an electrode area of about 360 cm². Discharge-charge cycling on these cells was done at 0.7/0.4 mA/cm², respectively, with discharge cutoff at a voltage of 1.3V and charge cutoff at 3V or 5 hour charge, whichever came first. Typical capacity of these cells was 362 mAh (specific capacity of 729 mAh/g of elemental sulfur in the cell) at the 5^{th} cycle with a total capacity fade of about 22% over the next 145 cycles, or 0.15% per cycle, as shown in Figure 3.

### Comparative Example 1

Prismatic cells were constructed as in Example 1, except that the electrolyte was a 0.75 M solution of lithium bis(trifluoromethylsulfonyl)imide in a 50:50 volume ratio mixture of 1,3-dioxolane and dimethoxyethane, a concentration lower than the electrolytes of the present invention.

Discharge-charge cycling of these was performed at 0.7/0.4 mA/cm², respectively, with discharge cutoff at a voltage of 1.3 V and charge cutoff at 3 V or 5 hour charge, whichever came first. Typical capacity of these cells was 310 mAh (specific capacity of 614 mAh/g of elemental sulfur in the cell) at the 5^{th} cycle with a total capacity fade of about 35% over the next 145 cycles, or 0.24% per cycle, as shown in Figure 3.

### Example 2

Prismatic cells were prepared as in Example 1 except that the electrode area was about 1000 cm². The electrolyte was that used in Example 1. Discharge-charge cycling of these cells was performed at 0.5/0.3 mA/cm², respectively, with discharge cutoff at voltage of 1.25 V and charge cutoff at 2.8 V or 20% overcharge versus the last discharge cycle, whichever came first. Depth of Discharge, DoD, of lithium was calculated based on total discharge capacity, Ct, for each cycle and theoretical capacity of starting amount of metallic lithium in the cell, C_{Li}, DoD = Ct / C_{Li}.

Figure of Merit, FOM, for cycle number N was calculated as a sum of DoD for all N cycles. Therefore, FOM = Sum (DoD).

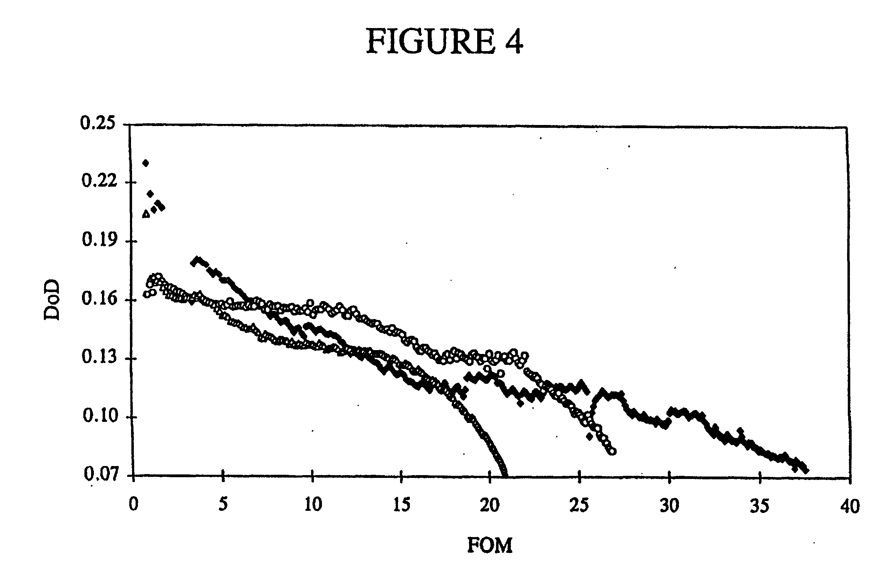

The cutoff was at a DoD of 7% at which the FOM was 26 and the number of cycles reached was 196 as shown in Figure 4.

### Example 3

Prismatic cells were prepared as in Example 2 except that the electrolyte was a mixture of solvates, lithium bis(trifluoromethylsulfonyl)imide•6 DOL and lithium bis(trifluoromethylsulfonyl)imide•3 DME in a weight ratio of 3:1. This electrolyte is about 1.9M lithium bis(trifluoromethylsulfonyl)imide in a 3:1 v/v mixture of 1,3-dioxolane and dimethoxyethane. The charge and discharge conditions were as used in Example 2.

The cutoff was at a DoD of 7% at which the FOM was 37 and the number of cycles reached was 338 as show in Figure 4.

### Comparative Example 2

Prismatic cells were prepared as in Example 2 except that the electrolyte was that used in Comparative Example 1. The charge and discharge conditions were as used in Example 2.

The cutoff was at DoD of 7% at which the FOM was 21 and the number of cycles reached was 149 as shown in Figure 4.

### Example 4

Prismatic cells with an electrode area of about 25 cm² were constructed from the cathode and separator compositions of Example 2 sandwiched with an anode formed on a 12 micron thick PET film on which was deposited a 500 Å layer of copper and a 10 micron layer of lithium. The electrolyte was mixture of 4 molar parts of sulfolane and one molar part of lithium bis(trifluoromethylsulfonyl)imide.

Specific discharge capacity was about 1063 mAh/g based on the sulfur content of the cell.

### Example 5

Prismatic cells with an electrode area of about 25 cm² were constructed as in Example 4. The electrolyte was mixture of 3 molar parts of sulfolane and one molar part of lithium bis(trifluoromethylsulfonyl)imide.

Specific discharge capacity was about 1021 mAh/g. based on the sulfur content of the cell.

### Example 6

Prismatic cells were constructed as in Example 2 except that the electrode area was about 800 cm².

These cells were discharged at GSM conditions with 2000 mA x 0.6 mS and 150 mA x 4.4 mS pulses. The electrolyte was a solvate complex of 4 molar parts of 1,3-dioxolane and one part of LiSCN, which is a 3.19 M solution.

Polarization resistance was calculated based on the voltage drop between high and low current pulses and found to be 84 mOhms.

### Example 7

Prismatic cells were constructed as in Example 6 and discharged at the same GSM conditions. The electrolyte was a solvate complex of 3 molar parts of 1,3-dioxolane and one part of LiSCN, which is a 4.09 M solution.

Polarization resistance, calculated as in Example 6, was 79 mOhms. Surprisingly the low polarization resistance occurs at an electrolyte concentration much higher than that of maximum ionic conductivity.

### Comparative Example 3

Prismatic cells were constructed as in Example 6 and discharged at the same GSM conditions. The electrolyte was mixture of 6 molar parts of 1,3-dioxolane and one part of LiSCN, about a 2.2 M solution, a concentration below that providing maximum conductivity.

Polarization resistance, calculated as in Example 6, was 434 mOhms.

### Example 8

Conductivity of solutions of LiSCN in 1,3-dioxolane was determined in YSI Model 3403 conductivity cells at 25 °C and measured at 10kHz in a Gen Rad 1659 RLC Digibridge apparatus. The results of the measurements are shown in Table 3.

**Table 3**

| Conductivity of LiSCN in 1,3-dioxolane at 25 °C | |
|---|---|
| **Concentration in moles/L** | **Conductivity in mS/cm** |
| 0.125 | 0.023 |
| 0.500 | 0.324 |
| 0.750 | 0.724 |
| 1.000 | 1.106 |
| 1.500 | 1.980 |
| 2.190 | 2.469 |
| 2.580 | 2.626 |
| 3.190 | 2.560 |
| 4.090 | 2.287 |
| 4.780 | 1.667 |
| 5.680 | 1.225 |
| 7.000 | 0.942 |

The results, which are plotted in Figure 2, show that the maximum conductivity is attained at a concentration of about 2.6 M.

### Example 9

Prismatic cells were constructed as in Example 4, with an electrode area of about 25 cm². The electrolyte was mixture of two solvate complexes: lithium bis(trifluoromethylsulfonyl)imide•6 DOL and LiSCN•2DME in a molar ratio 1 to 1.

Specific discharge capacity was about 1115 mAh/g based on the sulfur content of the cell.

While the invention has been described in detail and with reference to specific embodiments thereof, it will be apparent to one skilled in the art that various changes and modifications can be made without departing from the scope thereof.

## Claims

1. An electric current producing cell comprising:
(i) a cathode comprising a sulfur-containing cathode active material;
(ii) an anode; and,
(iii) a nonaqueous electrolyte interposed between said cathode and said anode, said electrolyte comprising:
one or more lithium salt solvate complexes, wherein:
(a) said solvate complexes comprise one or more lithium salts and one or more complexing solvents;
(b) said solvate complexes are **characterized by** n lithium-oxygen coordinate bonds per molecule of the solvate complex, where n is an integer from 2 to 6 and may be the same or different at each occurrence;
(c) the ratio, r, of the total oxygen equivalents of free solvating solvent of said electrolyte divided by the total oxygen equivalents of coordinated solvent in solvate complexes of said electrolyte, is less than 0.8;
(d) the molar concentration of said one or more lithium salt solvate complexes in said electrolyte is greater than 1.3 M; and,
(e) said one or more solvate complexes is liquid below 40 °C.

2. A cell according to claim 1, wherein said one or more solvate complexes is liquid below 0 °C.

3. A cell according to claim 1, wherein said one or more solvate complexes is liquid below -20 °C.

4. A cell according to any one of claims 1 to 3, wherein said one or more solvate complexes has a glass transition temperature below -30 °C.

5. A cell according to any one of claims 1 to 4, wherein said cell is a rechargeable cell.

6. A cell according to any one of claims 1 to 5, wherein said one or more lithium salts is selected from the group consisting of: LiI, LiSCN, LiCF₃SO₃, LiN(CF₃SO₂)₂, LiC(SO₂CF₃)₃, (LiSₓ)ₙR, and Li₂Sₓ, where x is an integer from 1 to 20; n is an integer from 1 to 3; and R is one or more aliphatic or aromatic moieties having 1 to 20 carbon atoms.

7. A cell according to any one of claims 1 to 5, wherein said one or more lithium salts comprises lithium thiocyanate.

8. A cell according to any one of claims 1 to 5, wherein said one or more lithium salts comprises lithium bis(trifluoromethylsulfonyl)imide.

9. A cell according to any one of claims 1 to 8, wherein said one or more complexing solvents is selected from the group consisting of: acyclic ethers, cyclic ethers, polyethers, and sulfones.

10. A cell according to any one of claims 1 to 8, wherein said one or more complexing solvents is an acyclic ether selected from the group consisting of:
dimethyl ether, diethyl ether, dipropyl ether, diisopropyl ether, dibutyl ether, bis-(2-ethylhexyl) ether, methyl t-butyl ether, dimethoxymethane, trimethoxymethane, ethylene glycol dimethyl ether, ethylene glycol diethyl ether, and propylene glycol dimethyl ether

11. A cell according to any one of claims 1 to 8, wherein said one or more complexing solvents is a cyclic ether selected from the group consisting of:
tetrahydrofuran, 2-methyl tetrahydrofuran, tetrahydropyran, oxepane, 1,3-dioxolane, 1,3-dioxane, 1,4-dioxane, 1,3-dioxepane, 1,4-dioxepane, and 1,4-dioxocane.

12. A cell according to any one of claims 1 to 8, wherein said one or more complexing solvents is a polyether selected from the group consisting of:
diethylene glycol dimethyl ether, triethylene glycol dimethyl ether, tetraethylene glycol dimethyl ether, dipropylene glycol dimethyl ether; and polybutylene glycol ethers.

13. A cell according to any one of claims 1 to 6, wherein said solvate complexes comprise:
one or more lithium salts selected from: lithium bis(trifluoromethylsulfonyl)imide, lithium thiocyanate, lithium iodide, and lithium triflate; and,
one or more complexing solvents selected from: 1,3-dioxolane, dimethoxyethane, dimethoxymethane, and, sulfolane.

14. A cell according to any one of claims 1 to 6, wherein said one or more solvate complex comprises lithium thiocyanate with 1,3-dioxolane.

15. A cell according to any one of claims 1 to 6, wherein said one or more solvate complexes comprises lithium bis(trifluoromethylsulfonyl)imide with 1,3-dioxolane and 1,2-dimethoxyethane.

16. A cell according to any one of claims 1 to 6, wherein said one or more solvate complexes comprises lithium bis(trifluoromethylsulfonyl)imide and lithium thiocyanate with dimethoxyethane and 1,3-dioxolane.

17. A cell according to any one of claims 1 to 16, wherein r is less than 0.4.

18. A cell according to any one of claims 1 to 16, wherein r is essentially zero.

19. A cell according to any one of claims 1 to 18, wherein said anode comprises lithium.

20. A cell according to any one of claims 1 to 19, wherein said cathode active material undergoes electrochemical reactions during operation of the cell by the breaking or forming of sulfur-sulfur covalent bonds.

## Patentansprüche

1. Elektrischen Strom erzeugende Zelle, umfassend:
(i) eine Kathode, die ein schwefelhältiges aktives Kathodenmaterial umfasst;
(ii) eine Anode; und
(iii) einen nichtwässrigen Elektrolyten, der zwischen der Kathode und der Anode angeordnet ist, wobei der Elektrolyt Folgendes umfasst:
einen oder mehrere Lithiumsalz-Solvatkomplex(e), worin
(a) die Solvatkomplexe ein oder mehrere Lithiumsalz(e) und ein oder mehrere komplexierende(s) Lösungsmittel umfassen;
(b) die Solvatkomplexe durch n koordinative Lithium-Sauerstoff-Bindungen pro Molekül des Solvatkomplexes **gekennzeichnet** sind, worin n eine ganze Zahl von 2 bis 6 ist, die jeweils gleich oder unterschiedlich sein kann;
(c) das Verhältnis r zwischen den Gesamt-Sauerstoff-Äquivalenten des freien, solvatisierenden Lösungsmittels des Elektrolyten und den Gesamt-Sauerstoff-Äquivalenten von koordiniertem Lösungsmittel in Solvatkomplexen des Elektrolyten geringer als 0,8 ist;
(d) die molare Konzentration des einen oder der mehreren Lithiumsalz-Solvatkomplexe(s) im Elektrolyten größer als 1,3 M ist; und
(e) der eine oder die mehreren Solvatkomplex(e) unter 40 °C flüssig ist bzw. sind.

2. Zelle nach Anspruch 1, worin der eine oder die mehreren Solvatkomplex(e) unter 0 °C flüssig ist bzw. sind.

3. Zelle nach Anspruch 1, worin der eine oder die mehreren Solvatkomplex(e) unter -20 °C flüssig ist bzw. sind.

4. Zelle nach einem der Ansprüche 1 bis 3, worin der eine oder die mehreren Solvatkomplex(e) eine Glastemperatur von unter -30 °C aufweist bzw. aufweisen.

5. Zelle nach einem der Ansprüche 1 bis 4, worin die Zelle eine wiederaufladbare Zelle ist.

6. Zelle nach einem der Ansprüche 1 bis 5, worin das eine oder die mehreren Lithiumsalz(e) aus der aus Folgenden bestehenden Gruppe ausgewählt ist bzw. sind: Lil, LiSCN, LiCF₃SO₃, LiN(CF₃SO₂)₂, LiC(SO₂CF₃)₃, (LiSₓ)ₙR und Li₂Sₓ, worin x eine ganze Zahl von 1 bis 20 ist; n eine ganze Zahl von 1 bis 3 ist; und R für eine oder mehrere aliphatische oder aromatische Gruppierung(en) mit 1 bis 20 Kohlenstoffatomen steht.

7. Zelle nach einem der Ansprüche 1 bis 5, worin das eine oder die mehreren Lithiumsalz(e) Lithiumthiocyanat umfasst bzw. umfassen.

8. Zelle nach einem der Ansprüche 1 bis 5, worin das eine oder die mehreren Lithiumsalze Lithiumbis(trifluormethylsulfonyl)imid umfasst bzw. umfassen.

9. Zelle nach einem der Ansprüche 1 bis 8, worin das eine oder die mehreren komplexierende(n) Lösungsmittel aus der aus azyklischen Ethern, zyklischen Ethern, Polyethern und Sulfonen bestehenden Gruppe ausgewählt ist bzw. sind.

10. Zelle nach einem der Ansprüche 1 bis 8, worin das eine oder die mehreren komplexierende(n) Lösungsmittel ein azyklischer Ether ist bzw. sind, der aus der aus Folgenden bestehenden Gruppe ausgewählt ist bzw. sind:
Dimethylether, Diethylether, Dipropylether, Diisopropylether, Dibutylether, Bis-(2-ethylhexyl)ether, Methyl-t-butylether, Dimethoxymethan, Trimethoxymethan, Ethylenglykoldimethylether, Ethylenglykoldiethylether und Propylenglykoldimethylether.

11. Zelle nach einem der Ansprüche 1 bis 8, worin das eine oder die mehreren komplexierende(n) Lösungsmittel ein zyklischer Ether ist bzw. sind, der aus der aus Folgenden bestehenden Gruppe ausgewählt ist:
Tetrahydrofuran, 2-Methyltetrahydrofuran, Tetrahydropyran, Oxepan, 1,3-Dioxolan, 1,3-Dioxan, 1,4-Dioxan, 1,3-Dioxepan, 1,4-Dioxepan und 1,4-Dioxocan.

12. Zelle nach einem der Ansprüche 1 bis 8, worin das eine oder die mehreren komplexierende(n) Lösungsmittel ein Polyether ist bzw. sind, der aus der aus Folgenden bestehenden Gruppe ausgewählt ist:
Diethylenglykoldimethylether, Triethylenglykoldimethylether, Tetraethylenglykoldimethylether, Dipropylenglykoldimethylether; sowie Polybutylenglykolethern.

13. Zelle nach einem der Ansprüche 1 bis 6, worin die Solvatkomplexe Folgendes umfassen:
ein oder mehrere Lithiumsalz(e), ausgewählt aus Lithiumbis(trifluormethylsulfonyl)imid, Lithiumthiocyanat, Lithiumiodid und Lithiumtriflat; und
ein oder mehrere komplexierende(s) Lösungsmittel, ausgewählt aus 1,3-Dioxolan, Dimethoxyethan, Dimethoxymethan und Sulfolan.

14. Zelle nach einem der Ansprüche 1 bis 6, worin der eine oder die mehreren Solvatkomplex(e) Lithiumthiocyanat mit 1,3-Dioxolan umfasst bzw. umfassen.

15. Zelle nach einem der Ansprüche 1 bis 6, worin der eine oder die mehreren Solvatkomplex(e) Lithiumbis(trifluormethylsulfonyl)imid mit 1,3-Dioxolan und 1,2-Dimethoxyethan umfasst bzw. umfassen.

16. Zelle nach einem der Ansprüche 1 bis 6, worin der eine oder die mehreren Solvatkomplex(e) Lithiumbis(trifluormethylsulfonyl)imid und Lithiumthiocyanat mit Dimethoxyethan und 1,3-Dioxolan umfasst bzw. umfassen.

17. Zelle nach einem der Ansprüche 1 bis 16, worin r kleiner als 0,4 ist.

18. Zelle nach einem der Ansprüche 1 bis 16, worin r im Wesentlichen 0 ist.

19. Zelle nach einem der Ansprüche 1 bis 16, worin die Anode Lithium umfasst.

20. Zelle nach einem der Ansprüche 1 bis 19, worin das aktive Kathodenmaterial während des Betriebs der Zelle elektrochemische Reaktionen unter Zerstörung oder Bildung kovalenter Schwefel-Schwefel-Bindungen eingeht.

## Revendications

1. Cellule électrique conductrice de courant comportant :
(i) une cathode comportant une matière cathodique active contenant du soufre ;
(ii) une anode ; et
(iii) un électrolyte non aqueux interposé entre ladite cathode et ladite anode, ledit électrolyte comportant :
un ou plusieurs complexes solvatés de sel de lithium dans lesquels :
(a) lesdits complexes solvatés comportent un ou plusieurs sels de lithium et un ou plusieurs solvants complexants ;
(b) lesdits complexes solvatés sont **caractérisés par** n liaisons de coordination lithium-oxygène par molécule de complexe solvaté, où n est un entier de 2 à 6 et peut être identique ou différent à chaque occurrence ;
(c) le rapport, r, de l'équivalent en oxygène total du solvant de solvatation libre dudit électrolyte divisé par l'équivalent en oxygène total du solvant coordonné dans les complexes solvatés dudit électrolyte, est inférieur à 0,8 ;
(d) la concentration molaire du ou desdits complexes de sel de lithium solvatés dans ledit électrolyte est supérieure à 1,3 M ; et,
(e) le ou lesdits complexes solvatés sont liquides en dessous de 40°C.

2. Cellule selon la revendication 1, dans laquelle le ou lesdits complexes solvatés sont liquides en dessous de 0°C.

3. Cellule selon la revendication 1, dans laquelle le ou lesdits complexes solvatés sont liquides en dessous de -20°C.

4. Cellule selon l'une quelconque des revendications 1 à 3, dans laquelle le ou lesdits complexes solvatés ont une température de transition vitreuse inférieure à -30°C.

5. Cellule selon l'une quelconque des revendications 1 à 4, dans laquelle ladite cellule est une cellule rechargeable.

6. Cellule selon l'une quelconque des revendications 1 à 5, dans laquelle le ou lesdits sels de lithium sont sélectionnés parmi le groupe composé de : LiI, LiSCN, LiCF₃SO₃ ,LiN(CF₃SO₂)₂, LiC(SO₂CF₃)₃, (LiSₓ)ₙR, et Li₂Sₓ, où x est un entier de 1 à 20 ; n est un entier de 1 à 3 ; et R est un ou plusieurs fragments aliphatiques ou aromatiques ayant 1 à 20 atomes de carbone.

7. Cellule selon l'une quelconque des revendications 1 à 5, dans laquelle le ou lesdits sels de lithium comportent du thiocyanate de lithium.

8. Cellule selon l'une quelconque des revendications 1 à 5, dans laquelle le ou lesdits sels de lithium comportent du lithium bis(trifluoromethylsulfonyl)imide.

9. Cellule selon l'une quelconque des revendications 1 à 8, dans laquelle le ou lesdits solvants complexants sont sélectionnés parmi le groupe constitué : des éthers acycliques, des éthers cycliques, des polyéthers, et des sulfones.

10. Cellule selon l'une quelconque des revendications 1 à 8, dans laquelle le ou lesdits solvants complexants sont des éthers acycliques sélectionnés parmi le groupe constitué :
du diméthyl éther, du diéthyl éther, du dipropyl éther, du diisoproyl éther, du dibutyl éther, du bis-(2-éthylhéxyl) éther, du méthyl t-butyl éther, diméthoxyméthane, du triméthoxyméthane, de l'éthylène glycol diméthyl éther, de l'éthylène glycol diéthyl éther, et du propylène glycol diméthyl éther.

11. Cellule selon l'une quelconque des revendications 1 à 8, dans laquelle le ou lesdits solvants complexants sont des éthers cycliques sélectionnés parmi le groupe constitué :
du tétrahydrofurane, du 2-methyl tétrahydrofurane, du tétrahydropyrane, de l'oxépane, du 1,3-dioxolane, du 1,3-dioxane, du 1,4-dioxane, du 1,3-doxépane, du 1,4-dioxépane, et du 1,4-dioxocane.

12. Cellule selon l'une quelconque des revendications 1 à 8, dans laquelle le ou lesdits solvants complexants sont des polyéthers sélectionnés parmi le groupe constitué :
du diéthylène glycol diméthyl éther, du triéthylène glycol diméthyl éther, du tétraéthylène glycol diméthyl éther, du dipropylène glycol diméthyl éther ;et des éthers du polybutylène glycol.

13. Cellule selon l'une quelconque des revendications 1 à 6, dans laquelle lesdits complexes solvatés comportent :
un ou plusieurs sels de lithium sélectionnés parmi : le lithium bis(trifluoromethylsulfonyl) imide, le thiocyanate de lithium, l'iodure de lithium, et le triflate de lithium ; et
un ou plusieurs solvants complexants sélectionnés parmi : le 1,3-dioxolane, le diméthoxyéthane, le diméthoxyméthane, et le sulfolane.

14. Cellule selon l'une quelconque des revendications 1 à 6, dans laquelle le ou lesdits complexes solvatés comportent du thiocyanate de lithium avec du 1,3-dioxolane.

15. Cellule selon l'une quelconque des revendications 1 à 6, dans laquelle le ou lesdits complexes solvatés comportent du lithium bis(trifluorométhylsulfonyl)imide avec du 1,3-dioxolane et du 1,2-diméthoxyéthane.

16. Cellule selon l'une quelconque des revendications 1 à 6, dans laquelle le ou lesdits complexes solvatés comportent du lithium bis(trifluorométhylsulfonyl)imide et du thiocyanate de lithium avec du diméthoxyéthane et du 1,3-dioxolane.

17. Cellule selon l'une quelconque des revendications 1 à 16, dans laquelle r est inférieur à 0,4.

18. Cellule selon l'une quelconque des revendications 1 à 16, dans laquelle r est essentiellement égal à zéro.

19. Cellule selon l'une quelconque des revendications 1 à 18, dans laquelle ladite anode comporte du lithium.

20. Cellule selon l'un quelconque des revendications 1 à 19, dans laquelle ladite matière cathodique active subit une réaction électrochimique de rupture ou de formation de liaisons covalentes soufre-soufre durant le fonctionnement de la cellule.
